# EUROPEAN PATENT SPECIFICATION

(11) **EP 1 055 596 B1**
(45) Date of publication and mention of the grant of the patent: **12.10.2005**
(21) Application number: 00110225.0
(22) Date of filing: 18.05.2000
(51) Int. Cl.: B62M 9/04, F16H 55/56, F16H 61/38, F16D 43/18

(54) **Biasing spring bearing for driven pulley of automatic continuously-variable transmission**
Gelenkfeder und Spurlager eines angetriebenen Riemenscheibers in einem Automatik-CVT- Getriebe
Ressort de rappel et pallier de butée pour la poulie entraînée d'une transmission à variation continue

(30) Priority: 28.05.1999 IT PD990065 U
(43) Date of publication of application: 29.11.2000
(73) Proprietor: Bettella S.r.l., 35010 Limena (Padova) (IT)
(72) Inventor: Bettella, Piergiorgio, 35135 Padova (IT)
(74) Representative: Modiano, Guido

(56) References cited:
- US-A- 2 556 512
- US-A- 4 345 664

## Description

The present invention relates to an improved automatic continuously-variable transmission, particularly but not exclusively useful for motorcycles or the like.

It is known that in many motorcycles, or in the category of vehicles commonly known as mopeds, an automatic continuously-variable transmission is preferred over a manual gearbox, which is more difficult to use; in its most general form, the transmission comprises a driving pulley which is kinematically connected to a driven pulley by means of V-belts.

The driving pulley is composite and is constituted by a half-pulley which is fixed to a first shaft which is connected to motor means and lies opposite a half-pulley which can move along the first shaft under the actuation of actuation rollers.

The driven pulley is slidingly associated with a second shaft, connected to at least one wheel of the vehicle to which the transmission is applied, by means of an interposed spring, coaxially to a clutch. A transmission of this type, which corresponds to the preamble of claim 1, is shown in US-A-4-345 664. This is taken as the closest prior art.

Although these automatic transmissions have been widely used for a long time, they still suffer drawbacks.

In particular, practical experience has shown a weak point in that, due to the general structural configuration, the spring interposed between the driven pulley and the clutch is often affected by external torsional stresses.

It is known that helical springs are poorly suited for this kind of external stress, especially if the torsion occurs along an axis of rotation that coincides with the longitudinal axis of said spring.

The aim of the present invention is to provide an improved automatic continuously-variable transmission, particularly for motorcycles or the like, in which the spring interposed between the driven pulley and the corresponding clutch is never subjected to significant torsional stresses applied with a center of rotation that coincides with its longitudinal axis.

Within the scope of this aim, an important object of the present invention is to provide an automatic transmission which is functionally competitive with respect to commercially available transmissions.

Another object of the present invention is to provide an automatic transmission which is highly flexible in relation to the type of vehicle to which it is applied and achieves a mechanical efficiency which is competitive with respect to the field of application.

Another object of the present invention is to provide an automatic transmission which is safe and can be manufactured at competitive costs with respect to commercially available transmissions having an equivalent functionality.

Another object of the present invention is to provide an automatic transmission which can be manufactured with known technologies and equipment.

These and other objects which will become better apparent hereinafter are achieved by an improved automatic continuously-variable transmission, particularly for motorcycles or the like, comprising a driving pulley which is kinematically connected, by means of a V-belt, to a driven pulley, said driving pulley being composite and being constituted by a half-pulley which is fixed to a first shaft which is connected to motor means and lies opposite a half-pulley which can move along said first shaft under the actuation of actuation rollers, said driven pulley being slidingly associated with a second shaft which is connected to at least one wheel of the vehicle to which the transmission is applied and is coaxially connected to a clutch by interposing a spring, characterized in that said spring rests, at its ends, against said clutch and against a corresponding side of said driven pulley, means for uncoupling from rotation with respect to the axis of said second shaft being interposed between the end of said spring that rests against said driven pulley and said driven pulley, said means being suitable to eliminate the transmission of any torsional stresses to said spring.

Further characteristics and advantages of the present invention will become better apparent from the description of an embodiment thereof, illustrated only by way of non-limitative example in the accompanying drawings, wherein:
Figure 1 is a sectional view of an automatic transmission according to the invention;
Figure 2 is a perspective exploded view of the transmission of Figure 1;
Figure 3 is a perspective view of a detail of the transmission of Figure 1;
Figure 4 is a sectional view of the detail of Figure 3;
Figure 5 is a sectional view of part of the detail of Figure 4.

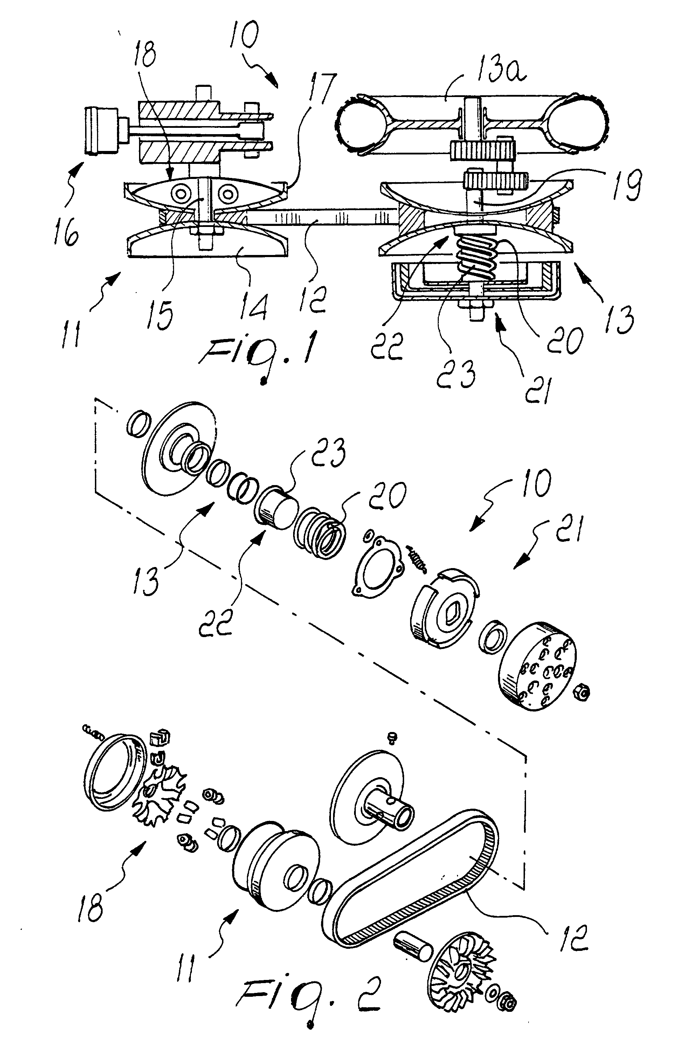

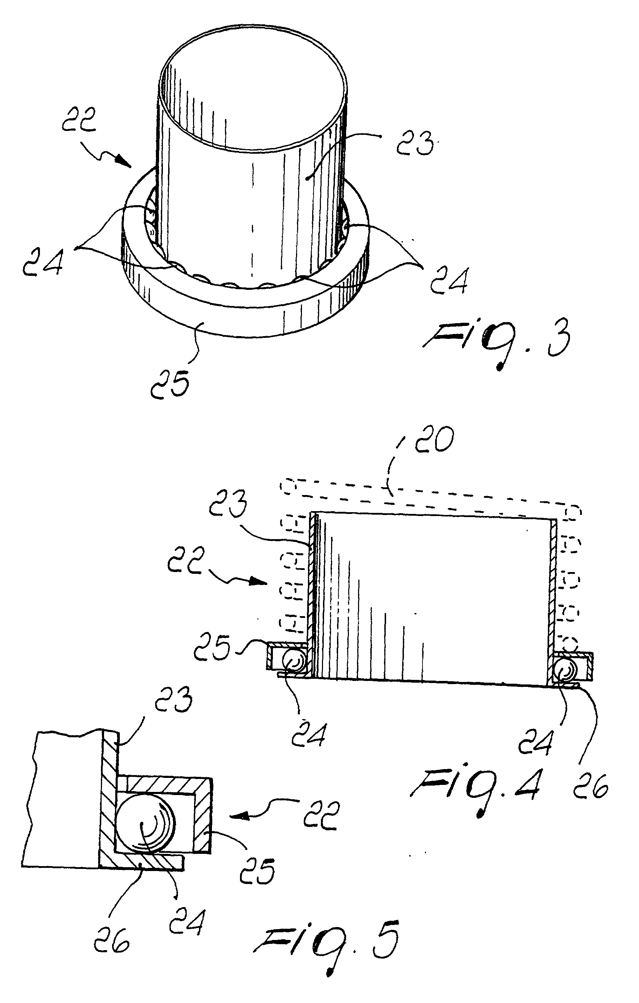

With reference to Figures 1 to 5, an improved automatic continuously-variable transmission, particularly for motorcycles or the like, according to the invention, is generally designated by the reference numeral 10.

The transmission 10 is of the type that comprises a driving pulley 11 which is kinematically connected, by means of a V-belt 12, to a driven pulley 13.

The driving pulley 11 is composite and is constituted by a half-pulley 14 which is fixed to a first shaft 15, is connected to motor means generally designated by the reference numeral 16, and lies opposite a half-pulley 17 which can move along the first shaft 15 under the actuation of actuation rollers generally designated by the reference numeral 18.

The driven pulley 13 is slidingly associated with a second shaft 19 which is connected to at least one wheel, shown schematically and designated by the reference numeral 13a in the figures, of the vehicle to which the transmission is applied; said connection is provided by interposing a spring, in this case a helical one designated by the reference numeral 20, coaxially to a clutch generally designated by the reference numeral 21.

The spring 20 rests, at its ends, against the clutch 21 and against a corresponding side of the second pulley 13.

Means are also provided for uncoupling from rotation with respect to the axis of the second shaft 19; such means are generally designated by the reference numeral 22, are interposed between the end of the spring 20 that rests against the driven pulley 13 and the driven pulley, and are suitable to eliminate the transmission of any torsional stresses to the spring 20.

In particular, the uncoupling means 22 are constituted, in this case, by a flanged cup 23 which is associated with a plurality of rolling balls 24.

In particular, in this embodiment, a ring 25 is associated with the cup 23 and has an L-shaped cross-section in which the cavity is arranged opposite the flange, designated by the reference numeral 26 in the figures, of the cup 23, so as to form with the flange a seat for accommodating the balls 24.

In practice it has been found that the present invention has achieved the intended aim and objects.

In particular it should be noted that the solution related to the transmission according to the invention allows its end that rests against the driven pulley to be kinematically uncoupled, in practice, as regards axial rotation with respect to the axes (which in any case coincide) of said spring and of the second shaft.

The kinematic uncoupling ensures that any torsional stresses induced by the driven pulley are never transferred to the spring, which can work exclusively in its intended manner.

It should also be noted that the transmission according to the invention achieves a structure which is substantially sturdy and suitable to achieve efficiencies which are fully adequate for commercially available transmissions.

It should also be observed that the constructive solution of the transmission according to the invention in no way significantly increases production costs.

The present invention is susceptible of numerous modifications and variations; thus, for example, the uncoupling means can be constituted by a rolling bearing.

The technical details can be replaced with other technically equivalent elements. The scope of the invention is defined by the attached claims.

The materials and the dimensions may be any according to requirements.

This application claims priority from Italian Utility Model Application No. PD99U000065.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An improved automatic continuously-variable transmission, particularly for motorcycles or the like, comprising a driving pulley (11) which is kinematically connected, by means of a V-belt (12), to a driven pulley (13), said driving pulley (11) being composite and being constituted by a half-pulley (14) which is fixed to a first shaft (15) which is connected to motor means and lies opposite a half-pulley (17) which can move along said first shaft (15) under the actuation of actuation rollers (18), said driven pulley (13) being slidingly associated with a second shaft (19) which is connected to at least one wheel (13a) of the vehicle to which the transmission is applied and is coaxially connected to a clutch (21) by interposing a spring (20), **characterized in that** said spring (20) rests, at its ends, against said clutch (21) and against a corresponding side of said driven pulley (13), means (22) for uncoupling from rotation with respect to the axis of said second shaft (19) being interposed between the end of said spring (20) that rests against said driven pulley (13) and said driven pulley, said means being suitable to eliminate the transmission of any torsional stresses to said spring (20).

2. The transmission according to claim 1, **characterized in that** said uncoupling means are constituted by a flanged cup (25) which is associated with rolling means.

3. The transmission according to claim 2, **characterized in that** said rolling means are constituted by a plurality of balls (24).

4. The transmission according to claim 2, **characterized in that** it comprises a supporting ring (26) which is arranged opposite the flange of said flanged cup so as to form, by cooperating with said flange, a seat for said rolling elements.

5. The transmission according to claim 4, **characterized in that** said ring (26) has an L-shaped cross-section.

6. The transmission according to claim 1, **characterized in that** said uncoupling means are constituted by at least one rolling bearing.

## Patentansprüche

1. Ein verbessertes automatisches stufenlos veränderbares Getriebe, insbesondere für Motorräder oder dergleichen, das folgendes umfasst: eine Antriebsscheibe (11), die kinematisch mit Hilfe eines Keilriemens (12) mit einer angetriebenen Riemenscheibe (13) verbunden ist, wobei die Antriebsscheibe (11) zusammengesetzt ist und aus einer halben Riemenscheibe (14) besteht, die an einer ersten Welle (15) befestigt ist, die mit einem Motormittel verbunden ist, und einer halben Riemenscheibe (17) gegenüberliegt, die sich bei Betätigung von Betätigungsrollen (18) entlang der ersten Welle (15) bewegen kann, wobei die angetriebene Riemenscheibe (13) mit einer zweiten Welle (19) verschiebbar verknüpft ist, die mit mindestens einem Rad (13a) des Fahrzeugs verbunden ist, auf das die Übertragung ausgeübt wird, und koaxial durch Zwischenschalten einer Feder (20) mit einer Kupplung (21) verbunden ist, **dadurch gekennzeichnet, dass** die Feder (20) an ihren Enden gegen die Kupplung (21) und gegen eine entsprechende Seite der angetriebenen Riemenscheibe (13) aufliegt, wobei Mittel (22) zum Auskuppeln von der Drehung in Bezug auf die Achse der zweiten Welle (19) zwischen dem Ende der Feder (20), das gegen die angetriebene Riemenscheibe (13) aufliegt, und der angetriebenen Riemenscheibe zwischengelegt sind, wobei die Mittel geeignet sind, um die Übertragung von jeglichen Drehspannungen auf die Feder (20) zu beseitigen.

2. Das Getriebe gemäß Anspruch 1, **dadurch gekennzeichnet, dass** das Auskupplungsmittel aus einer Pfanne (25) mit Flansch besteht, die mit Rollmitteln verknüpft ist.

3. Das Getriebe gemäß Anspruch 2, **dadurch gekennzeichnet, dass** die Rollmittel aus einer Vielzahl von Kugeln (24) bestehen.

4. Das Getriebe gemäß Anspruch 2, **dadurch gekennzeichnet, dass** es einen Haltering (26) umfasst, der gegenüber dem Flansch der Pfanne mit Flansch angeordnet ist, so dass er durch Zusammenwirken mit dem Flansch einen Sitz für die Rollelemente bildet.

5. Das Getriebe gemäß Anspruch 4, **dadurch gekennzeichnet, dass** der Ring (26) einen L-förmigen Querschnitt hat.

6. Das Getriebe gemäß Anspruch 1, **dadurch gekennzeichnet, dass** die Auskopplungsmittel aus mindestens einem Kugellager bestehen.

## Revendications

1. Transmission automatique améliorée variable en continu, en particulier pour motocyclettes ou analogues, comprenant une poulie d'entraînement (11) relié de façon cinématique, au moyen d'une courroie en forme de V (12), à une poulie entraînée (13), ladite poulie d'entraînement (11) étant composite et étant constituée d'une demi-poulie (14) fixée à un premier arbre (15) qui est relié aux moyens moteur et qui se trouve en face d'une demi-poulie (17) pouvant se déplacé le long du dit premier arbre (15) sous l'action de galets d'actionnements (18), ladite poulie entraînée (13) étant associée de façon coulissante à un deuxième arbre (19) qui est relié à au moins une roue (13a) du véhicule auquel la transmission est appliquée et qui est relié de façon coaxiale à un embrayage (21) par l'interposition d'un ressort (20), **caractérisé en ce que** ledit ressort (20) repose, à ses extrémités, contre ledit embrayage (21) et contre un côté correspondant de ladite poulie entraînée (13), des moyens (22) pour le désengagement de la rotation par rapport à l'axe du dit deuxième arbre (19) étant interposés entre l'extrémité du dit ressort (20) qui repose contre ladite poulie entraînée (13) et ladite poulie entraînée, lesdits moyens étant appropriés pour éliminer la transmission de tout effort de torsion audit ressort (20).

2. Transmission selon la revendication 1, **caractérisée en ce que** lesdits moyens de désengagement sont constitués par un godet à collerette (25) associé à des moyens de roulement.

3. Transmission selon la revendication 2, **caractérisée en ce que** lesdits moyens de roulement sont constitués par une pluralité de billes (24).

4. Transmission selon la revendication 2, **caractérisée en ce qu'**elle comprend un anneau de support (26) agencé en face de la collerette du dit godet à collerette de façon à former, par coopération avec ladite collerette, un siège pour lesdits moyens de roulement.

5. Transmission selon la revendication 4, **caractérisée en ce que** ledit anneau (26) présente une section transversale en forme de L.

6. Transmission selon la revendication 1, **caractérisée en ce que** les moyens de désengagement sont constitués par au moins un palier à roulement.
